# EUROPEAN PATENT APPLICATION

(11) **EP 4 772 950 A1**
(43) Date of publication of application: **08.07.2026**
(21) Application number: 25757627.2
(22) Date of filing: 10.02.2025
(51) Int. Cl.: G05B 23/02

(54) **VEHICLE DIAGNOSTIC PROCESSING METHOD, APPARATUS, DEVICE, VEHICLE AND STORAGE MEDIUM**

(30) Priority: 23.02.2024 CN 202410200030
(71) Applicant: Zhejiang Geely Holding Group Co., Ltd., Hangzhou, Zhejiang 310051 (CN); Geely Automobile Research Institute (Ningbo) Co., Ltd., Ningbo, Zhejiang 315336 (CN)
(72) Inventor: CHE, Changfa, Hangzhou Bay New District Ningbo, Zhejiang 315336 (CN); LU, Zhe, Hangzhou Bay New District Ningbo, Zhejiang 315336 (CN); ZHEN, Haichuan, Hangzhou Bay New District Ningbo, Zhejiang 315336 (CN); WANG, Jiang, Hangzhou Bay New District Ningbo, Zhejiang 315336 (CN)
(74) Representative: Boult Wade Tennant LLP
(86) International application number: PCT/CN2025/076595
(87) International publication number: WO 2025/176030

(57) **Abstract**

A vehicle diagnostic processing method, an apparatus, a device (50), a vehicle (60), and a storage medium. The method includes: obtaining, by a diagnostic communication protocol module (51), a diagnostic service request (101), where the diagnostic service request includes a service request event and a service request type; performing, by the diagnostic communication protocol module (51), filtering and unpacking processing on the diagnostic service request to obtain a processed diagnostic service request (102); uploading, by a service allocation module (52), the processed diagnostic service request to a diagnostic event management module (53) or a data communication module (54) according to a service request type in the processed diagnostic service request (103); and upon receiving the processed diagnostic service request, performing, by the diagnostic event management module (53) or the data communication module (54), corresponding service diagnostic processing according to the service request event (104). The method improves fault diagnosis efficiency and reduces the development costs of the diagnostic device and vehicle maintenance difficulties.

## Description

The present application claims priority to Chinese patent application No. 202410200030.0, filed with the China National Intellectual Property Administration on February 23, 2024, and entitled "VEHICLE DIAGNOSTIC PROCESSING METHOD, APPARATUS, DEVICE, VEHICLE, AND STORAGE MEDIUM", the entire contents of which are incorporated into the present application by reference.

### TECHNICAL FIELD

The present application relates to the field of communication technology, and in particular, to a vehicle diagnostic processing method, an apparatus, a device, a vehicle, and a storage medium.

### BACKGROUND

With the widespread use of vehicles, vehicles have become the main means of travel in our daily lives, bringing great convenience to our lives. However, various faults may occur during the use of vehicles. To solve these problems, maintenance personnel can use middleware in on-board diagnostics (On-Board Diagnostics, abbreviated as OBD) for fault diagnosis to determine whether a vehicle has a fault.

However, in the development process of commonly used on-board diagnostics, diagnostic services are developed while developing application programs. For a same diagnostic type, different application programs all need duplicate codes to implement corresponding diagnostic services thereof, resulting in code duplication as well as a relatively close connection and high coupling between the development of application programs and the development of diagnostic services. Furthermore, if a diagnostic protocol of a diagnostic service changes or is upgraded, application programs also need to be modified and updated accordingly, which will consequently lead to a prolonged development cycle and reduced development efficiency, as well as increased development costs and maintenance difficulties.

### SUMMARY

The present application provides a vehicle diagnostic processing method, an apparatus, a device, a vehicle, and a storage medium, aiming to solve the technical problem of high code duplication as well as high development costs and maintenance difficulties for fault diagnosis.

In a first aspect, the present application provides a vehicle diagnostic processing method, applied to a diagnostic device, where the diagnostic device includes: a diagnostic communication protocol module, a service allocation module, a diagnostic event management module, and a data communication module, and the method includes:
obtaining, by the diagnostic communication protocol module, a diagnostic service request, where the diagnostic service request includes a service request event and a service request type;
performing, by the diagnostic communication protocol module, filtering and unpacking processing on the diagnostic service request to obtain a processed diagnostic service request;
uploading, by the service allocation module, the processed diagnostic service request to the diagnostic event management module or the data communication module according to a service request type in the processed diagnostic service request; and
upon receiving the processed diagnostic service request, performing, by the diagnostic event management module or the data communication module, corresponding service diagnostic processing according to the service request event.

Optionally, in the method as described above, the diagnostic device further includes: a session determination module, and the method further includes:
if determining that the processed diagnostic service request meets a preconfigured filtering condition, taking, by the session determination module, the processed diagnostic service request as a target diagnostic service request and reporting the target diagnostic service request to the service allocation module; and
the uploading, by the service allocation module, the processed diagnostic service request to the diagnostic event management module or the data communication module according to a service request type in the processed diagnostic service request includes:
   uploading, by the service allocation module, the target diagnostic service request to the diagnostic event management module or the data communication module according to the service request type in the target diagnostic service request.

Optionally, in the method as described above, the uploading, by the service allocation module, the processed diagnostic service request to the diagnostic event management module or the data communication module according to a service request type in the processed diagnostic service request includes:
when determining that the service request type is a passive service request type, uploading, by the service allocation module, the processed diagnostic service request to the diagnostic event management module matching the passive service request type;
   or
when determining that the service request type is an active service request type, uploading, by the service allocation module, the processed diagnostic service request to the data communication module matching the active service request type.

Optionally, in the method as described above, the upon receiving the processed diagnostic service request, performing, by the diagnostic event management module or the data communication module, corresponding service diagnostic processing according to the service request event includes:
upon receiving the processed diagnostic service request, reading, by the diagnostic event management module, diagnostic information related to the service request event from the diagnostic event management module according to the service request event, and obtaining a fault code corresponding to the diagnostic information.

Optionally, in the method as described above, the upon receiving the processed diagnostic service request, performing, by the diagnostic event management module or the data communication module, corresponding service diagnostic processing according to the service request event includes:
upon receiving the processed diagnostic service request, determining, by the data communication module, an operating mode corresponding to the diagnostic service request according to a target controller in the processed diagnostic service request; and
when determining that the operating mode corresponding to the diagnostic service request is an intra-domain operating mode, sending, by the data communication module, the processed diagnostic service request to a local domain controller, to allow the local domain controller to perform a diagnostic operation according to a target diagnostic application corresponding to the service request event and obtain diagnostic information.

Optionally, the method as described above further includes:
when determining that the operating mode corresponding to the diagnostic service request is an inter-domain operating mode, sending, by the data communication module, the processed diagnostic service request to an external domain controller, to allow the external domain controller to perform a diagnostic operation according to the target diagnostic application corresponding to the service request event and obtain diagnostic information.

In a second aspect, the present application provides a diagnostic device, where the diagnostic device includes a diagnostic communication protocol module, a service allocation module, a diagnostic event management module, and a data communication module;
the diagnostic communication protocol module is configured to obtain a diagnostic service request;
the diagnostic communication protocol module is further configured to perform filtering and unpacking processing on the diagnostic service request to obtain a processed diagnostic service request;
the service allocation module is configured to upload the processed diagnostic service request to the diagnostic event management module or the data communication module according to a service request type in the processed diagnostic service request; and
the diagnostic event management module is configured to, upon receiving the processed diagnostic service request, perform corresponding service diagnostic processing according to the service request event;
   or
the data communication module is configured to, upon receiving the processed diagnostic service request, perform corresponding service diagnostic processing according to the service request event.

In a third aspect, the present application provides an electronic device, including: a processor and a memory communicatively connected to the processor;
where the memory stores a computer-executable instruction; and
the processor executes the computer-executable instruction stored in the memory to implement the vehicle diagnostic method according to any one of the foregoing embodiments.

In a fourth aspect, the present application provides a vehicle, including domain controllers and a diagnostic device disposed in each of the domain controllers, where the diagnostic device is configured to implement the vehicle diagnostic method according to any one of the foregoing embodiments.

In a fifth aspect, the present application provides a computer-readable storage medium, where the computer-readable storage medium stores a computer-executable instruction which, when executed by a processor, is used to implement the vehicle diagnostic processing method according to any one of the foregoing embodiments.

In a sixth aspect, the present application provides a computer program product, including a computer program which, when executed by a processor, implements the vehicle diagnostic processing method according to any one of the foregoing embodiments.

In a seventh aspect, the present application provides a computer program which, when executed by a processor, is used to implement the vehicle diagnostic processing method according to any one of the foregoing embodiments.

The present application provides a vehicle diagnostic processing method, an apparatus, a device, a vehicle, and a storage medium. The method may be applied to a diagnostic device including: a diagnostic communication protocol module, a service allocation module, a diagnostic event management module, and a data communication module. The diagnostic communication protocol module obtains a diagnostic service request and performs filtering and unpacking processing to obtain a processed diagnostic service request; then the service allocation module uploads, according to a service request type in the processed diagnostic service request, the processed diagnostic service request to the diagnostic event management module or the data communication module for corresponding service diagnostic processing. Compared with the technical problem in the prior art, where diagnostic services are developed while developing application programs, and different application programs need duplicate codes to implement corresponding diagnostic services thereof for a same diagnostic type, leading to a prolonged development cycle and reduced development efficiency, in the present application, a diagnostic service request containing various service request events and service request types can be received through the diagnostic service protocol module; and after being filtered and unpacked based on the diagnostic communication protocol module, the diagnostic service request can be correspondingly allocated to the diagnostic event management module or the data communication module based on the service allocation module for the corresponding diagnostic processing, thereby implementing support for a variety of diagnostic services. When different application programs are developed, corresponding diagnostic services are invoked, without the need to develop duplicate codes for a same type of diagnostic service. Therefore, fault diagnosis efficiency is effectively improved, and the development costs and maintenance difficulties of the diagnostic device are reduced.

### BRIEF DESCRIPTION OF DRAWINGS

The accompanying drawings herein, which are incorporated in and constitute a part of the description, illustrate embodiments consistent with the present application and together with the description, serve to explain the principles of the present application.
FIG. 1 is a schematic architecture diagram of an application scenario of a vehicle diagnostic processing method in the present application;
FIG. 2 is a schematic flow chart of an embodiment of a vehicle diagnostic processing method provided by the present application;
FIG. 3 is a schematic flow chart of another embodiment of a vehicle diagnostic processing method provided by the present application;
FIG. 4 is a schematic flow chart of yet another embodiment of a vehicle diagnostic processing method provided by the present application;
FIG. 5 is a schematic flow chart of still another embodiment of a vehicle diagnostic processing method provided by the present application;
FIG. 6 is a schematic structural diagram of an embodiment of a diagnostic device provided by the present application;
FIG. 7 is a schematic structural diagram of an embodiment of a vehicle provided by the present application;
FIG. 8 is a schematic structural diagram of an embodiment of an electronic device provided by the present application.

Through the above accompanying drawings, explicit embodiments of the present application have been clearly shown, which will be described in more detail below. These drawings and textual descriptions are not intended to limit the scope of the concept of the present application in any way, but to explain the concept of the present application to those skilled in the art by referring to specific embodiments.

### DESCRIPTION OF EMBODIMENTS

Exemplary embodiments will be described in detail herein, examples of which are illustrated in the accompanying drawings. When the following description refers to the accompanying drawings, same numerals in different drawings denote same or similar elements unless otherwise indicated. Implementations described in the following exemplary embodiments do not represent all implementations consistent with the present application. Instead, they are merely examples of apparatuses and methods consistent with some aspects of the present application as detailed in the appended claims.

With the continuous improvement of vehicle popularity, vehicles have become a common means of transportation for people, providing great convenience for people's daily travel. However, faults will inevitably occur during the use of vehicles. To solve these problems, we can use middleware to diagnose the faults.

However, in traditional diagnostic methods, the previous development practice is to couple the application layer with diagnostic strategies. Even for a same diagnostic type, corresponding codes for the required diagnostic type needs to be written for respective application programs to implement fault diagnosis. This coupling approach makes a system difficult to expand and maintain, because once the communication protocol changes or is upgraded, the diagnostic software also needs to be modified and updated accordingly. Therefore, code duplication is caused, and the development costs and maintenance difficulties are increased.

To solve the above-mentioned technical problem, the inventive concept of the present application is: how to implement the decoupling between diagnostic services and application software, improve fault diagnosis efficiency, and reduce the development costs and maintenance difficulties.

Technical solutions of the present application and how the technical solutions of the present application solve the above-mentioned technical problem will be described in detail below with specific embodiments. The following several specific embodiments may be combined with each other, and same or similar concepts or processes may not be repeated in some embodiments. The embodiments of the present application will be described below with reference to the accompanying drawings.

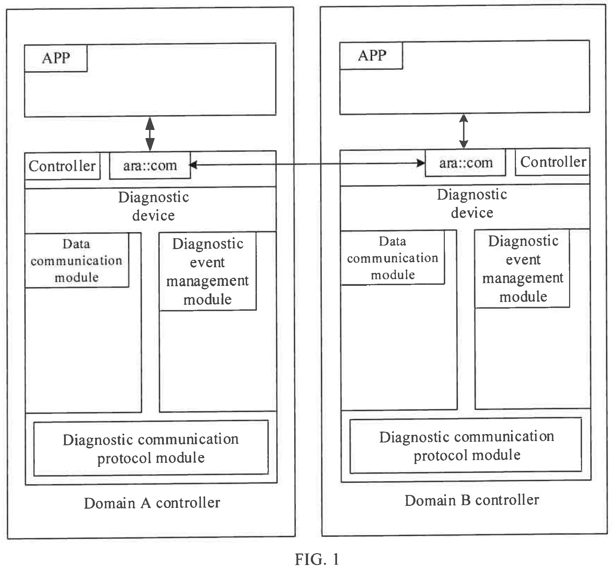

FIG. 1 is a schematic architecture diagram of an application scenario of a vehicle diagnostic processing method in the present application. As shown in FIG. 1, the scenario mainly includes multiple domains, each of which includes multiple controllers connected to each other via an Ethernet. For example, the present application takes 2 domains as an example, namely domain A and domain B; and takes one controller in each domain as an example, i.e., a domain A controller and a domain B controller, with a diagnostic device deployed in each controller. The diagnostic device includes a diagnostic communication protocol module, a data communication module, and a diagnostic event management module. Specifically, the diagnostic communication protocol module is configured to obtain a diagnostic service request, including calls to UDP and TCP interfaces; the data communication module is mainly configured to support a diagnostic communication service; and the diagnostic event management module is mainly configured to support a diagnostic event service, and implement a call to the application layer APP and cross-domain communication via a controller's API interfaces for communication interaction.

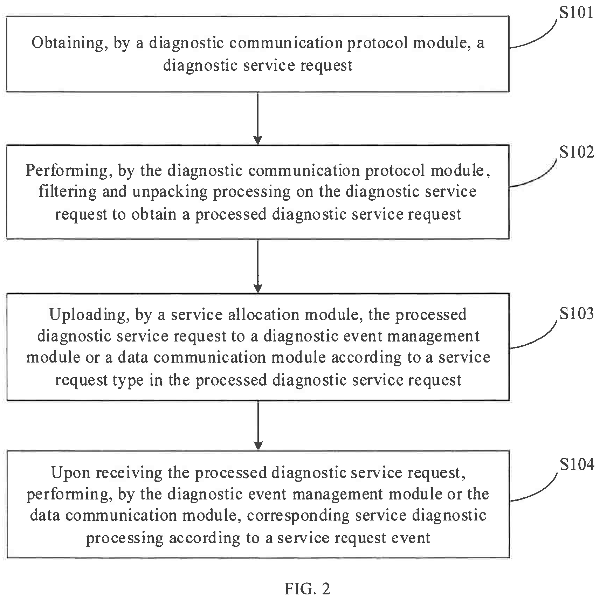

FIG. 2 is a schematic flow chart of an embodiment of a vehicle diagnostic processing method provided by the present application. As shown in FIG. 2, the method includes:
Step 101: obtaining, by a diagnostic communication protocol module, a diagnostic service request.

In this embodiment, when an access device accesses the diagnostic communication protocol module which may be, for example, a DoIP module, the DoIP module may obtain a diagnostic service request sent by the access device, where the diagnostic service request includes a service request event and a service request type.

Step 102: performing, by the diagnostic communication protocol module, filtering and unpacking processing on the diagnostic service request to obtain a processed diagnostic service request.

In this embodiment, after receiving the diagnostic service request from the access device, the DoIP module filters the diagnostic service request according to preset filtering rules. These rules may include a target device, a diagnostic type, a data range, and the like. Only a request that meets the filtering rules will be processed. For the filtered diagnostic service request, the DoIP module performs an unpacking operation to obtain the processed diagnostic service request.

Step 103: uploading, by a service allocation module, the processed diagnostic service request to a diagnostic event management module or a data communication module according to a service request type in the processed diagnostic service request.

In this embodiment, upon receiving the processed diagnostic service request, the service allocation module analyzes the service request type in the diagnostic service request, and uploads the processed diagnostic service request, according to different request types, to the diagnostic event management (DEM) module or the data communication module (DCM), respectively.

Step 104: upon receiving the processed diagnostic service request, performing, by the diagnostic event management module or the data communication module, corresponding service diagnostic processing according to the service request event.

In this embodiment, upon receiving the processed diagnostic service request of a corresponding type respectively, the diagnostic event management module and the data communication module perform the corresponding service diagnostic processing according to the service request event in the diagnostic service request.

In this embodiment, the diagnostic communication protocol module obtains the diagnostic service request and performs the filtering and unpacking processing on the diagnostic service request; the service allocation module uploads the processed diagnostic service request to the diagnostic event management module or the data communication module according to the service request type in the processed diagnostic service request; and the diagnostic event management module or the data communication module performs the corresponding service diagnostic processing. Compared with the technical problem in the prior art, where diagnostic services are developed while developing application programs, and different application programs need duplicate codes to implement corresponding diagnostic services thereof for a same diagnostic type, leading to a prolonged development cycle and reduced development efficiency, the diagnostic device provided by the present application can receive the diagnostic service request containing various service request events and service request types; and after being filtered and unpacked based on the diagnostic communication protocol module, the diagnostic service request can be correspondingly allocated to the diagnostic event management module or the data communication module based on the service allocation module for the corresponding diagnostic processing, thereby implementing support for a variety of diagnostic services. When different application programs are developed, it is not necessary to develop duplicate codes for a same type of diagnostic service. Therefore, the fault diagnosis efficiency is effectively improved, and the development costs and maintenance difficulties of the diagnostic device are reduced.

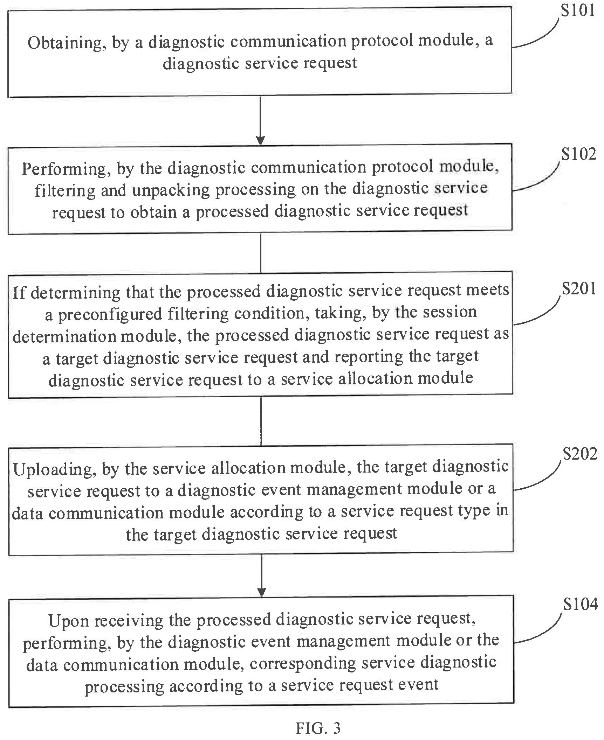

FIG. 3 is a schematic flow chart of another embodiment of a vehicle diagnostic processing method provided by the present application. As shown in FIG. 3, on the basis of the above-mentioned embodiments, the diagnostic device further includes a session determination module, and the method further includes:
Step 201: if determining that the processed diagnostic service request meets a preconfigured filtering condition, taking, by the session determination module, the processed diagnostic service request as a target diagnostic service request and reporting the target diagnostic service request to the service allocation module.

In this embodiment, the processed diagnostic service request is parsed, and a matching degree of the obtained processed diagnostic service request is determined according to information of a current session and a preset session rule. If session information of the request does not match the current session, the request may not be processed. According to a determination result, a diagnostic service request that meets the current session is filtered, the processed diagnostic service request is taken as the target diagnostic service request, and the target diagnostic service request is reported to the service allocation module.

Correspondingly, a specific implementation manner of "uploading, by a service allocation module, the processed diagnostic service request to a diagnostic event management module or a data communication module according to a service request type in the processed diagnostic service request" in step 103 of the above-mentioned embodiment is:
Step 202: uploading, by the service allocation module, the target diagnostic service request to the diagnostic event management module or the data communication module according to the service request type in the target diagnostic service request.

In this embodiment, upon receiving the target diagnostic service request, the service allocation module analyzes the service request type in the diagnostic service request, and uploads the target diagnostic service request, according to different request types, to the diagnostic event management module or the data communication module, respectively.

In this embodiment, the session determination module determines whether the processed diagnostic service request meets the preconfigured filtering condition, and reports the diagnostic service request meeting the current session as the target diagnostic service request to the service allocation module; and the service allocation module uploads, according to different request types, the request to the diagnostic event management module or the data communication module respectively. The method of the present application can reduce unnecessary diagnostic service requests being sent to subsequent modules through the filtering mechanism of the session determination module, improving processing efficiency; and at the same time, the service allocation module can allocate the service request to the diagnostic event management module or the data communication module according to the service request type, ensuring that different types of requests are properly processed, and further optimizing service allocation and resource utilization.

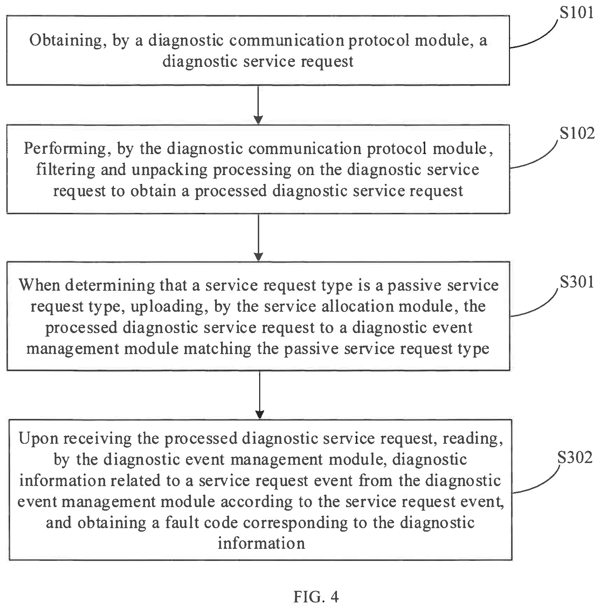

FIG. 4 is a schematic flow chart of yet another embodiment of a vehicle diagnostic processing method provided by the present application. As shown in FIG. 4, on the basis of the above-mentioned embodiments, a specific implementation method of step 103 "uploading, by a service allocation module, the processed diagnostic service request to a diagnostic event management module or a data communication module according to a service request type in the processed diagnostic service request" or step 202 "uploading, by the service allocation module, the target diagnostic service request to the diagnostic event management module or the data communication module according to the service request type in the target diagnostic service request" may further include:
Step 301: when determining that the service request type is a passive service request type, uploading, by the service allocation module, the processed diagnostic service request to the diagnostic event management module matching the passive service request type.

In this embodiment, after receiving the processed diagnostic service request, the service allocation module first performs type determination. If it is determined that the service request type is the passive service request type, the service allocation module uploads the processed diagnostic service request to the diagnostic event management module matching the passive service request type.

Correspondingly, on the basis of the above-mentioned embodiments, a specific implementation method of step 104 "upon receiving the processed diagnostic service request, performing, by the diagnostic event management module or the data communication module, corresponding service diagnostic processing according to the service request event" may further include:
Step 302: upon receiving the processed diagnostic service request, reading, by the diagnostic event management module, diagnostic information related to the service request event from the diagnostic event management module according to the service request event, and obtaining a fault code corresponding to the diagnostic information.

In this embodiment, when a fault occurs in an application, this application immediately sends diagnostic information to a corresponding diagnostic event management module, and the diagnostic information of this application is stored in the diagnostic event management module; and upon receiving the processed diagnostic service request, the diagnostic event management module in the diagnostic event management module parses the service request event, reads the diagnostic information related to the service request event from the diagnostic event management module, and obtains the fault code corresponding to the diagnostic information.

In this embodiment, the diagnostic event management module stores the diagnostic information generated by the corresponding application when the fault occurs; and upon receiving the processed diagnostic service request, the diagnostic event management module reads, according to the service request event, the diagnostic information related to the service request event from the diagnostic event management module, and obtains the fault code corresponding to the diagnostic information. Compared with the prior art, in the method of the present application, the diagnostic event management module stores the diagnostic information generated by the application when the fault occurs and directly reads the corresponding diagnostic information when the diagnostic service request is obtained, thereby improving diagnostic accuracy and efficiency.

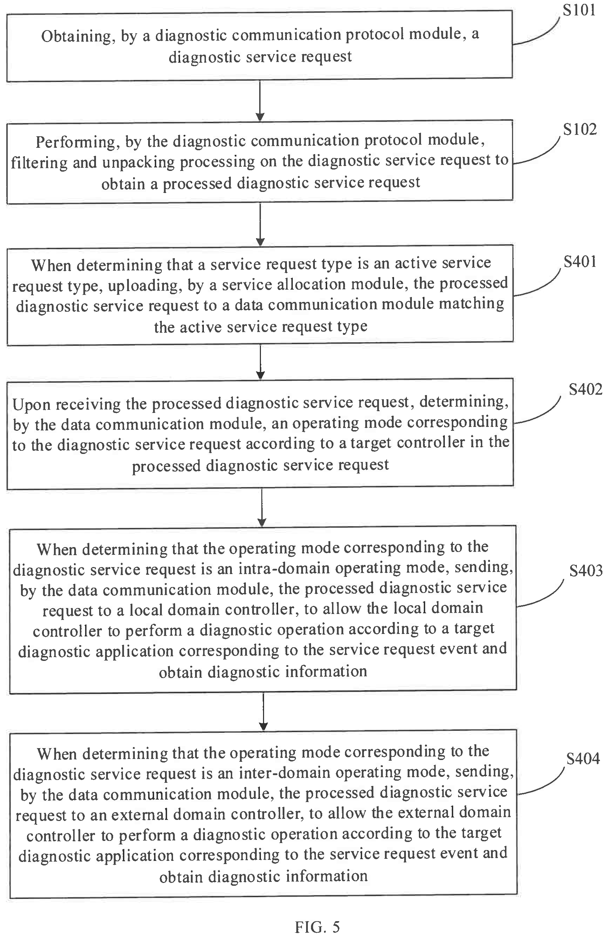

FIG. 5 is a schematic flow chart of still another embodiment of a vehicle diagnostic processing method provided by the present application. As shown in FIG. 5, on the basis of the above-mentioned embodiments, a specific implementation method of step 103 "uploading, by a service allocation module, the processed diagnostic service request to a diagnostic event management module or a data communication module according to a service request type in the processed diagnostic service request" or step 202 "uploading, by the service allocation module, the target diagnostic service request to the diagnostic event management module or the data communication module according to the service request type in the target diagnostic service request" may further include:
Step 401: when determining that the service request type is an active service request type, uploading, by the service allocation module, the processed diagnostic service request to the data communication module matching the passive service request type.

In this embodiment, if it is determined that the service request type is the active service request type, the service allocation module uploads the processed diagnostic service request to the data communication module matching the active service request type.

In this embodiment, the service allocation module classifies the target diagnostic service request type into an active service type and a passive service type according to the service request type in the processed diagnostic service request; and accordingly, uploads processed diagnostic service requests of different service types to the data communication module or the diagnostic event management module matching the service request type respectively. Compared with the prior art, in the method of the present application, the service request type is classified into the active service type and the passive service type, enabling the service allocation module to process the diagnostic service request more efficiently. Meanwhile, by uploading the processed diagnostic service request to a corresponding module according to different service types, diagnostic services can be allocated more reasonably, thereby improving the efficiency of the overall diagnostic service.

Correspondingly, on the basis of the above-mentioned embodiments, a specific implementation method of step 104 "upon receiving the processed diagnostic service request, performing, by the diagnostic event management module or the data communication module, corresponding service diagnostic processing according to the service request event" may further include:
Step 402: upon receiving the processed diagnostic service request, determining, by the data communication module, an operating mode corresponding to the diagnostic service request according to a target controller in the processed diagnostic service request.

In this embodiment, upon receiving the processed diagnostic service request, the data communication module parses the content of the processed diagnostic service request and obtains the target controller corresponding to the service request, thereby determining the operating mode corresponding to the diagnostic service request according to the target controller.

Step 403: when determining that the operating mode corresponding to the diagnostic service request is an intra-domain operating mode, sending, by the data communication module, the processed diagnostic service request to a local domain controller, to allow the local domain controller to perform a diagnostic operation according to a target diagnostic application corresponding to the service request event and obtain diagnostic information.

In this embodiment, when determining that the operating mode corresponding to the diagnostic service request is the intra-domain operating mode, the data communication module interacts with a diagnostic application in a local domain through an ara::com interface of the local domain controller, and finally the processed diagnostic service request is provided to an intra-domain application interface for the application to call and obtain the diagnostic information.

In this embodiment, the data communication module determines the operating mode corresponding to the diagnostic service request according to the target controller in the processed diagnostic service request. When it is determined that the operating mode corresponding to the diagnostic service request is the intra-domain operating mode, the processed diagnostic service request is sent to the local domain controller, to allow the corresponding target diagnostic application to perform the diagnostic operation and obtain the diagnostic information. Compared with the prior art, in the method of the present application, the operating mode corresponding to the diagnostic service request is determined according to the target controller in the processed diagnostic service request; and when the operating mode corresponding to the diagnostic service request is the intra-domain operating mode, the data communication module can send the processed diagnostic service request to the local domain controller, which can improve adaptability and efficiency of a diagnostic service.

Further, on the basis of the above-mentioned embodiments, the method further includes:
Step 404: when determining that the operating mode corresponding to the diagnostic service request is an inter-domain operating mode, sending, by the data communication module, the processed diagnostic service request to an external domain controller, to allow the external domain controller to perform a diagnostic operation according to the target diagnostic application corresponding to the service request event and obtain diagnostic information.

In this embodiment, when determining that the operating mode corresponding to the diagnostic service request is the inter-domain operating mode, the data communication module interacts with an ara::com interface of the external domain controller through the ara::com interface of the local domain controller, and sends the processed diagnostic service request to the ara::com interface of the external domain controller, and finally the processed diagnostic service request received by the external domain controller is provided to an external domain application interface for the application to call and obtain the diagnostic information.

In this embodiment, when it is determined that the operating mode corresponding to the diagnostic service request is the inter-domain operating mode, the processed diagnostic service request is sent to the external domain controller through the interaction between the ara::com interface of the local domain controller and the ara::com interface of the external domain controller, to allow the external domain controller to perform the diagnostic operation according to the target diagnostic application corresponding to the service request event. Compared with the prior art, the method of the present application implements the cross-domain transmission of the diagnostic service request, which helps to obtain more comprehensive diagnostic information and improve diagnostic accuracy and completeness, and also enhances system scalability and flexibility.

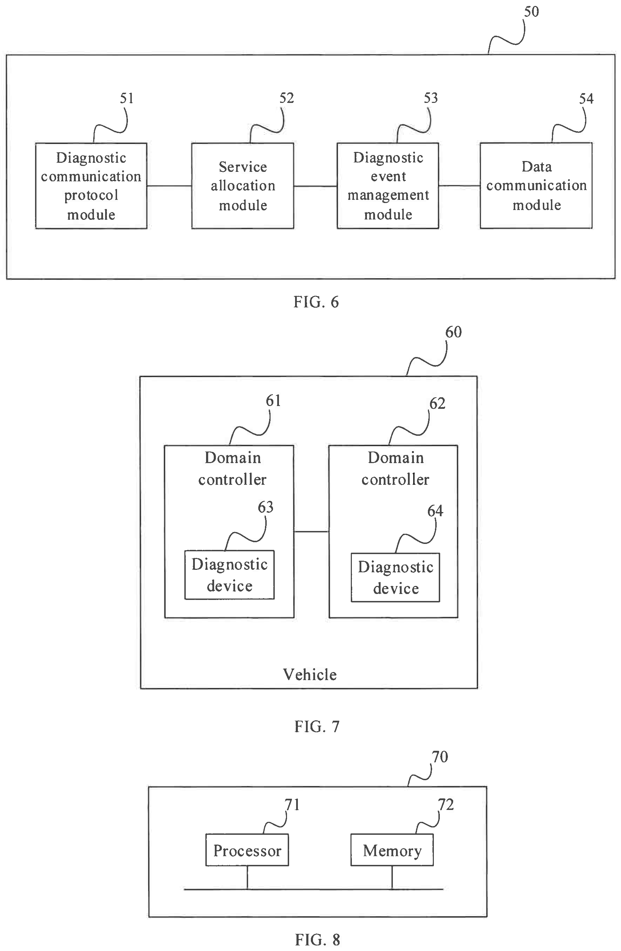

FIG. 6 is a schematic structural diagram of an embodiment of a diagnostic device provided by the present application. As shown in FIG. 6, the diagnostic device 50 includes a diagnostic communication protocol module 51, a service allocation module 52, a diagnostic event management module 53, and a data communication module 54.

The diagnostic communication protocol module 51 is configured to obtain a diagnostic service request.

The diagnostic communication protocol module 51 is further configured to perform filtering and unpacking processing on the diagnostic service request to obtain a processed diagnostic service request.

The service allocation module 52 is configured to upload the processed diagnostic service request to the diagnostic event management module or the data communication module according to a service request type in the processed diagnostic service request.

The diagnostic event management module 53 is configured to, upon receiving the processed diagnostic service request, perform corresponding service diagnostic processing according to a service request event.

Alternatively,
the data communication module 54 is configured to, upon receiving the processed diagnostic service request, perform corresponding service diagnostic processing according to the service request event.

The diagnostic device provided by the embodiment of the present application can execute the technical solution shown in any one of the above-mentioned method embodiments, and implementation principles and beneficial effects thereof are similar, which will not be repeated here.

Further, on the basis of this embodiment, the diagnostic device 50 may further include a session determination module 55, configured to, if it is determined that the processed diagnostic service request meets a preconfigured filtering condition, take the processed diagnostic service request as a target diagnostic service request and report the target diagnostic service request to the service allocation module.

Then the service allocation module 52 is further configured to upload the target diagnostic service request to the diagnostic event management module or the data communication module according to a service request type in the target diagnostic service request.

The diagnostic device provided by the embodiment of the present application can execute the technical solution shown in any one of the above-mentioned method embodiments, and the implementation principles and beneficial effects thereof are similar, which will not be repeated here.

FIG. 7 is a schematic structural diagram of an embodiment of a vehicle provided by the present application. As shown in FIG. 7, the vehicle 60 includes two domain controllers, namely a domain controller 61 and a domain controller 62; and a diagnostic device is further disposed in each of the domain controllers, where the domain controller 61 corresponds to a diagnostic device 63, and the domain controller 62 corresponds to a diagnostic device 64.

The diagnostic devices in the vehicle provided by the embodiment of the present application can execute the technical solution shown in any one of the above-mentioned method embodiments, and implementation principles and beneficial effects thereof are similar, which will not be repeated here.

FIG. 8 is a schematic structural diagram of an embodiment of an electronic device provided by the present application. As shown in FIG. 8, the server 70 may include: a processor 71 and a memory 72.

The processor 71 is communicatively connected to the memory 72, and the memory 72 is configured to store a computer-executable instruction; and the processor 71 is configured to execute the technical solution in any one of the foregoing method embodiments by executing the computer-executable instruction stored in the memory 72.

Optionally, the memory 72 may be either independent or integrated with the processor 71. Optionally, when the memory 72 is a component independent of the processor 71, the electronic device 70 may further include: a bus configured to connect the above-mentioned components.

The electronic device is configured to execute the technical solution in any one of the foregoing method embodiments, and implementation principles and technical effects thereof are similar, which will not be repeated here.

An embodiment of the present application further provides a computer program product, including a computer program which, when executed by a processor, implements the vehicle diagnostic processing method according to any one of the foregoing embodiments.

An embodiment of the present application further provides a computer program which, when executed by a processor, is used to implement the vehicle diagnostic processing method according to any one of the foregoing embodiments.

An embodiment of the present application further provides a computer-readable storage medium storing a computer-executable instruction which, when executed by a processor, is used to implement the above-mentioned methods, implementation principles and technical effects thereof are similar, which will not be repeated here.

Specifically, the computer-readable storage medium may include various media that can store a computer-executable instruction, such as a USB flash drive, a removable hard disk, a read-only memory (Read-Only Memory, ROM), a RAM, a magnetic disk, or an optical disc. Specifically, the computer-executable instruction is stored in the computer-readable storage medium. When the computer-executable instruction is executed by a computer, the technical solutions illustrated in the above-mentioned method embodiments are implemented. The specific implementation manners and technical effects are similar and will not be described again here.

It should be noted that for the sake of simple description, the foregoing method embodiments are all expressed as a combination of a series of actions, but those skilled in the art should know that the present application is not limited by the described order of actions, because according to the present application, some steps may be performed in other orders or simultaneously. Secondly, those skilled in the art should also know that the embodiments described in the specification are all optional embodiments, and the involved actions and modules are not necessarily required by the present application.

It should be further noted that although the various steps in the flow charts are shown in sequence according to the arrow indications, these steps are not necessarily executed in sequence according to the arrow indications. Unless explicitly stated herein, the execution of these steps is not strictly limited in order, and these steps may be executed in other orders. Moreover, at least some of the steps in the flow charts may include multiple sub-steps or multiple stages, which are not necessarily executed at the same moment, but may be executed at different moments, and the execution order of these sub-steps or stages is not necessarily sequential, but may be executed alternately or in turn with at least a part of other steps or sub-steps/stages of other steps.

It should be understood that the apparatus embodiments described above are merely illustrative, and the apparatus of the present application may also be implemented in other ways. For example, the division of units/modules in the above-mentioned embodiments is only a logical function division, and there may be other division manners in actual implementation. For example, multiple units, modules or components may be combined, or integrated into another system, or some features may be omitted or not executed.

In addition, unless otherwise specified, each functional unit/module in each embodiment of the present application may be integrated into one unit/module, or each unit/module may exist physically independently, or two or more units/modules may be integrated into one unit/module. The above-mentioned integrated units/modules may be implemented in the form of hardware or in the form of software program modules.

If the integrated units/modules are implemented in the form of hardware, the hardware may be a digital circuit, an analog circuit, and the like. The physical implementation of the hardware structure includes, but is not limited to, transistors, memristors, and the like. Unless otherwise specified, a processor may be any appropriate hardware processor, such as a CPU, a GPU, an FPGA, a DSP, an ASIC, and the like. Unless otherwise specified, a storage unit may be any appropriate magnetic storage medium or magneto-optical storage medium, such as a resistive random access memory RRAM (Resistive Random Access Memory), a dynamic random access memory DRAM (Dynamic Random Access Memory), a static random-access memory SRAM (Static Random-Access Memory), an enhanced dynamic random access memory EDRAM (Enhanced Dynamic Random Access Memory), a high-bandwidth memory HBM (High-Bandwidth Memory), a hybrid memory cube HMC (Hybrid Memory Cube), and the like.

If the integrated units/modules are implemented in the form of software program modules and sold or used as an independent product, they may be stored in a computer-readable memory. Based on such understanding, the technical solution of the present application, in essence or the part that contributes to the prior art, or all or part of the technical solution, may be embodied in the form of a software product, and the computer software product is stored in a memory and includes several instructions to cause a computer device (which may be a personal computer, a server, or a network device, etc.) to execute all or part of the steps of the methods in each embodiment of the present application. The aforementioned memory includes: a USB flash drive, a read-only memory (ROM, Read-Only Memory), a random access memory (RAM, Random Access Memory), a mobile hard disk, a magnetic disk, an optical disc, and other various media capable of storing program codes.

In the above-mentioned embodiments, each embodiment is described with its own focus, and for parts that are not detailed in a certain embodiment, reference may be made to the relevant descriptions of other embodiments. The various technical features of the above-mentioned embodiments may be combined arbitrarily. For the sake of concise description, not all possible combinations of the various technical features in the above-mentioned embodiments have been described. However, as long as there is no contradiction in the combinations of these technical features, all should be considered as the scope recorded in the specification.

Those skilled in the art will easily think of other implementations of the present application after considering the specification and practicing the invention disclosed herein. The present application is intended to cover any variations, uses, or adaptive changes of the present application, which follow the general principles of the present application and include common general knowledge or conventional technical means in the technical field not disclosed in the present application. The specification and embodiments are only regarded as exemplary, and the true scope and spirit of the present application are indicated by the following claims.

It should be understood that the present application is not limited to the precise structure described above and shown in the accompanying drawings, and various modifications and changes may be made without departing from its scope. The scope of the present application is only limited by the appended claims.

## Claims

1. A vehicle diagnostic processing method, applied to a diagnostic device, wherein the diagnostic device comprises: a diagnostic communication protocol module, a service allocation module, a diagnostic event management module, and a data communication module, and the method comprises:
obtaining, by the diagnostic communication protocol module, a diagnostic service request, wherein the diagnostic service request comprises a service request event and a service request type;
performing, by the diagnostic communication protocol module, filtering and unpacking processing on the diagnostic service request to obtain a processed diagnostic service request;
uploading, by the service allocation module, the processed diagnostic service request to the diagnostic event management module or the data communication module according to a service request type in the processed diagnostic service request; and
upon receiving the processed diagnostic service request, performing, by the diagnostic event management module or the data communication module, corresponding service diagnostic processing according to the service request event.

2. The method according to claim 1, wherein the diagnostic device further comprises: a session determination module, and the method further comprises:
if determining that the processed diagnostic service request meets a preconfigured filtering condition, taking, by the session determination module, the processed diagnostic service request as a target diagnostic service request and reporting the target diagnostic service request to the service allocation module; and
the uploading, by the service allocation module, the processed diagnostic service request to the diagnostic event management module or the data communication module according to a service request type in the processed diagnostic service request comprises:
uploading, by the service allocation module, the target diagnostic service request to a diagnostic event management module or a data communication module according to the service request type in the target diagnostic service request.

3. The method according to claim 1 or 2, wherein the uploading, by the service allocation module, the processed diagnostic service request to the diagnostic event management module or the data communication module according to a service request type in the processed diagnostic service request comprises:
when determining that the service request type is a passive service request type, uploading, by the service allocation module, the processed diagnostic service request to the diagnostic event management module matching the passive service request type;
or
when determining that the service request type is an active service request type, uploading, by the service allocation module, the processed diagnostic service request to the data communication module matching the active service request type.

4. The method according to any one of claims 1 to 3, wherein the upon receiving the processed diagnostic service request, performing, by the diagnostic event management module or the data communication module, corresponding service diagnostic processing according to the service request event comprises:
upon receiving the processed diagnostic service request, reading, by the diagnostic event management module, diagnostic information related to the service request event from a diagnostic event management module according to the service request event, and obtaining a fault code corresponding to the diagnostic information.

5. The method according to any one of claims 1 to 3, wherein the upon receiving the processed diagnostic service request, performing, by the diagnostic event management module or the data communication module, corresponding service diagnostic processing according to the service request event comprises:
upon receiving the processed diagnostic service request, determining, by the data communication module, an operating mode corresponding to the diagnostic service request according to a target controller in the processed diagnostic service request; and
when determining that the operating mode corresponding to the diagnostic service request is an intra-domain operating mode, sending, by the data communication module, the processed diagnostic service request to a local domain controller, to allow the local domain controller to perform a diagnostic operation according to a target diagnostic application corresponding to the service request event and obtain diagnostic information.

6. The method according to claim 5, wherein the method further comprises:
when determining that the operating mode corresponding to the diagnostic service request is an inter-domain operating mode, sending, by the data communication module, the processed diagnostic service request to an external domain controller, to allow the external domain controller to perform a diagnostic operation according to the target diagnostic application corresponding to the service request event and obtain diagnostic information.

7. A diagnostic device, wherein the diagnostic device comprises a diagnostic communication protocol module, a service allocation module, a diagnostic event management module, and a data communication module;
the diagnostic communication protocol module is configured to obtain a diagnostic service request;
the diagnostic communication protocol module is further configured to perform filtering and unpacking processing on the diagnostic service request to obtain a processed diagnostic service request;
the service allocation module is configured to upload the processed diagnostic service request to the diagnostic event management module or the data communication module according to a service request type in the processed diagnostic service request; and
the diagnostic event management module is configured to, upon receiving the processed diagnostic service request, perform corresponding service diagnostic processing according to the service request event;
or
the data communication module is configured to, upon receiving the processed diagnostic service request, perform corresponding service diagnostic processing according to the service request event.

8. An electronic device, comprising: a processor and a memory communicatively connected to the processor;
wherein the memory stores a computer-executable instruction; and
the processor executes the computer-executable instruction stored in the memory to implement the method according to any one of claims 1 to 6.

9. A vehicle, comprising domain controllers and a diagnostic device disposed in each of the domain controllers, wherein the diagnostic device is configured to implement the method according to any one of claims 1 to 6.

10. A computer-readable storage medium, wherein the computer-readable storage medium stores a computer-executable instruction which, when executed by a processor, is used to implement the method according to any one of claims 1 to 6.

11. A computer program product, comprising a computer program which, when executed by a processor, implements the method according to any one of claims 1 to 6.

12. A computer program which, when executed by a processor, implements the method according to any one of claims 1 to 6.
